(19) **Europäisches Patentamt / European Patent Office / Office européen des brevets**

(11) **EP 1 704 535 B1**

(12) **EUROPEAN PATENT SPECIFICATION**

(45) Date of publication and mention
of the grant of the patent:
**24.10.2007 Bulletin 2007/43**

(21) Application number: **04806496.8**

(22) Date of filing: **29.12.2004**

(51) Int Cl.:
**G06T 15/20** (2006.01)

(86) International application number:
**PCT/IB2004/004332**

(87) International publication number:
**WO 2005/076224 (18.08.2005 Gazette 2005/33)**

(54) **METHOD OF RENDERING GRAPHICAL OBJECTS**

VERFAHREN ZUR WIEDERGABE GRAPHISCHER OBJEKTE

PROCEDE DE RENDU D'OBJETS GRAPHIQUES

(84) Designated Contracting States:
**AT BE BG CH CY CZ DE DK EE ES FI FR GB GR
HU IE IS IT LI LT LU MC NL PL PT RO SE SI SK TR**

(30) Priority: **06.01.2004 EP 04300010**

(43) Date of publication of application:
**27.09.2006 Bulletin 2006/39**

(73) Proprietor: **NXP B.V.
5656 AG Eindhoven (NL)**

(72) Inventors:
• **CUNAT, Christophe,
c/o Société Civile SPID
F-75008 Paris (FR)**
• **MATHIEU, Yves,
c/o Société Civile SPID
F-75008 Paris (FR)**

(74) Representative: **Röggla, Harald et al
NXP Semiconductors
Intellectual Property Department
Gutheil-Schoder-Gasse 8-12
1101 Vienna (AT)**

(56) References cited:
• **GHAZANFARPOUR D ET AL: "A HIGH-QUALITY
FILTERING USING FORWARD TEXTURE
MAPPING" COMPUTERS AND GRAPHICS,
PERGAMON PRESS LTD. OXFORD, GB, vol. 15,
no. 4, January 1991 (1991-01), pages 569-577,
XP000281890 ISSN: 0097-8493**
• **WANG P ET AL: "An image-based texture
mapping technique for apparel products
exhibition and interior design" DISPLAYS,
ELSEVIER, BARKING, GB, vol. 24, no. 4-5,
December 2003 (2003-12), pages 179-186,
XP004499789 ISSN: 0141-9382**
• **EWINS J P ET AL: "Implementing an anisotropic
texture filter" COMPUTERS AND GRAPHICS,
PERGAMON PRESS LTD. OXFORD, GB, vol. 24,
no. 2, April 2000 (2000-04), pages 253-267,
XP004236371 ISSN: 0097-8493**
• **BARENBRUG B: "Pixel shading and forward
texture mapping" INTERNATIONAL WORKSHOP
ON VISION, MODELING AND VISUALIZATION.
PROCEEDINGS, XX, XX, 19 November 2003
(2003-11-19), pages 345-353, XP002287911**

EP 1 704 535 B1

**Description**

**FIELD OF THE INVENTION**

The present invention relates to a method of and a device for mapping an input image onto an output image.
This invention may be used in digital apparatuses adapted to render graphical objects such as, for example, video decoders, 3D graphic accelerators, video game consoles, personal digital assistants or mobile phones.

**BACKGROUND OF THE INVENTION**

Texture mapping is a process for mapping an input image onto a surface of a graphical object to enhance the visual realism of a generated output image including said graphical object. Intricate detail at the surface of the graphical object is very difficult to model using polygons or other geometric primitives, and doing so can greatly increase the computational cost of said object. Texture mapping is a more efficient way to represent fine detail on the surface of the graphical object. In a texture mapping operation, a texture data item of the input image is mapped onto the surface of the graphical object as said object is rendered to create the output image.
In conventional digital images, the input and output images are sampled at discrete points, usually on a grid of points with integer coordinates. The input image has its own coordinate space $(u,v)$. Individual elements of the input image are referred to as "texels." Said texels are located at integer coordinates in the input coordinate system $(u,v)$. Similarly, the output image has its own coordinate space $(x,y)$. Individual elements of the output image are referred to as "pixels." Said pixels are located at integer coordinates in the output coordinate system $(x,y)$.
The process of texture mapping conventionally includes filtering texels from the input image so as to compute an intensity value for a pixel in the output image. Conventionally, the input image is linked to the output image via an inverse affine transform $T^{-1}$ that can be expressed by the following equations:

$$\begin{cases} u = u_{ref} + \dfrac{\partial u}{\partial x}dx + \dfrac{\partial u}{\partial y}dy \\[4mm] v = v_{ref} + \dfrac{\partial v}{\partial x}dx + \dfrac{\partial v}{\partial y}dy \end{cases} \tag{1}$$

where $(u,v)$ are the coordinates of an input current point, $(u_{ref},v_{ref})$ are the coordinates of an input reference point, $\dfrac{\partial u}{\partial x}, \dfrac{\partial u}{\partial y}, \dfrac{\partial v}{\partial x}$ and $\dfrac{\partial v}{\partial y}$ are affine coefficients, and $dx = x - X_{ref}$, $dy = y - y_{ref}$.

Similarly, the output image is linked to the input image via a direct affine transform $T$ that can be expressed by the following equations:

$$\begin{cases} x = x_{ref} + \dfrac{\partial x}{\partial u}du + \dfrac{\partial x}{\partial v}dv \\[4mm] y = y_{ref} + \dfrac{\partial y}{\partial u}du + \dfrac{\partial y}{\partial v}dv \end{cases} \tag{2}$$

where $(x,y)$ are the coordinates of an output current point, $(x_{ref},y_{ref})$ are the coordinates of an output reference point, $\dfrac{\partial x}{\partial u}, \dfrac{\partial y}{\partial u}, \dfrac{\partial x}{\partial v}$ and $\dfrac{\partial y}{\partial v}$ are affine coefficients, and $du = u - u_{ref}$, $dv = v - v_{ref}$.

Equations (1) are called the backward mapping equations (i.e. the input coordinates are expressed as a function of the output coordinates) and equations (2) are called the forward mapping equations (i.e. the output coordinates are expressed as a function of the input coordinates).
In the paper of Ghazanfarpour D., Peroche B., A high-quality filtering using forward texture mapping, Computers and Graphics, Pergamon Press Ltd. Oxford, GB, Vol. 15, No. 4, pp 569-577, January 1991, both techniques are mentioned.

As explained above, the output image is made of a plurality of triangles defined by the positions of their vertices in both output and input coordinate systems. Said positions define a unique affine transform between a triangle in the input image and a triangle in the output image. To generate the output image, each output triangle is scan-converted to calculate the intensity value of each pixel of the triangle on the basis of intensity values of texels.

The texels to be filtered for a given pixel are determined thanks to the inverse affine transform $T^{-1}$. The result of the inverse affine transform of the given pixel is a transformed point in the input image. Texels neighboring said transformed point in the input image are then sampled, weighted and summed to compute the intensity value of the given pixel. This process is repeated for all the pixels in the output image.

In order to make the scan-conversion relatively simple with only incremental computations, an expensive computational setup is required. This setup computes the affine coefficients $\dfrac{\partial u}{\partial x}, \dfrac{\partial u}{\partial y}, \dfrac{\partial v}{\partial x}$ and $\dfrac{\partial v}{\partial y}$ and output triangle edge slopes $a_{01}$, $a_{02}$ and $a_{12}$. If the coordinates of the vertices of the input triangle are (u0,v0), (u1,v1) and (u2,v2) and if the coordinates of the vertices of the output triangle are (x0,y0), (x1,y1) and (x2,y2), said coefficients and slopes are determined from the equations (3) and (4), respectively:

$$
\begin{cases}
\dfrac{\partial u}{\partial x} = \dfrac{(u1 - u0)(y2 - y0) - (y1 - y0)(u2 - u0)}{(x1 - x0)(y2 - y0) - (y1 - y0)(x2 - x0)} \\[2mm]
\dfrac{\partial u}{\partial y} = \dfrac{(x1 - x0)(u2 - u0) - (u1 - u0)(x2 - x0)}{(x1 - x0)(y2 - y0) - (y1 - y0)(x2 - x0)} \\[2mm]
\dfrac{\partial v}{\partial x} = \dfrac{(v1 - v0)(y2 - y0) - (y1 - y0)(v2 - v0)}{(x1 - x0)(y2 - y0) - (y1 - y0)(x2 - x0)} \\[2mm]
\dfrac{\partial v}{\partial y} = \dfrac{(x1 - x0)(v2 - v0) - (v1 - v0)(x2 - x0)}{(x1 - x0)(y2 - y0) - (y1 - y0)(x2 - x0)}
\end{cases} \,.
\tag{3}
$$

$$
\begin{cases}
a_{01} = \dfrac{x1 - x0}{y1 - y0} \\[2mm]
a_{02} = \dfrac{x2 - x0}{y2 - y0} \\[2mm]
a_{12} = \dfrac{x2 - x1}{y2 - y1}
\end{cases}
\tag{4}
$$

A hardware system being able to compute these coefficients requires large arithmetic operators. This increases the silicon area needed for the implementation of said operators and thereafter the price of the hardware system.

**SUMMARY OF THE INVENTION**

It is an object of the invention to propose a method of and a device for mapping an input image onto an output image, which is less computational expensive than the one of the

prior art.

To this end, the mapping method in accordance with the invention is characterized in that it comprises the steps of:

- determining an inverse affine transform for transforming an intermediate rectangle triangle into an input triangle;

- determining a direct affine transform for transforming the intermediate rectangle triangle into an output triangle;
- applying the inverse affine transform to intermediate points of the intermediate rectangle triangle so as to determine intermediate intensity values corresponding to said intermediate points on the basis of input intensity values of texels; and
- applying the direct affine transform to the intermediate points so as to determine output intensity values of pixels on the basis of the intermediate intensity values.

As it will be explained in more detail hereinafter, the introduction of an intermediate space between the input image and the output image makes possible to determine easily the inverse affine transform and the direct affine transform, contrary to the prior art where the determination of the inverse or direct affine transform is more complex. As a consequence, the mapping method in accordance with the invention allows silicon area to be saved and less power to be consumed.

The present invention also relates to a device implementing such a mapping method and to a portable apparatus comprising said device.

Said invention finally relates to a computer program product comprising program instructions for implementing said mapping method.

These and other aspects of the invention will be apparent from and will be elucidated with reference to the embodiments described hereinafter.

## BRIEF DESCRIPTION OF THE DRAWINGS

The present invention will now be described in more detail, by way of example, with reference to the accompanying drawings, wherein:

- Figure 1 shows an image comprising triangle meshes;
- Figure 2 illustrates a first embodiment of the mapping method in accordance with the invention;
- Figure 3 shows a filtering step based on finite impulse response FIR filters;
- Figure 4 illustrates another embodiment of the mapping method in accordance with the invention;
- Figure 5 illustrates a particular case of transformation between an intermediate space and an output image;
- Figure 6 shows another embodiment of the mapping method in accordance with the invention to solve the particular case of Figure 5; and
- Figure 7 shows a block diagram of a rendering device in accordance with the invention.

## DETAILED DESCRIPTION OF THE INVENTION

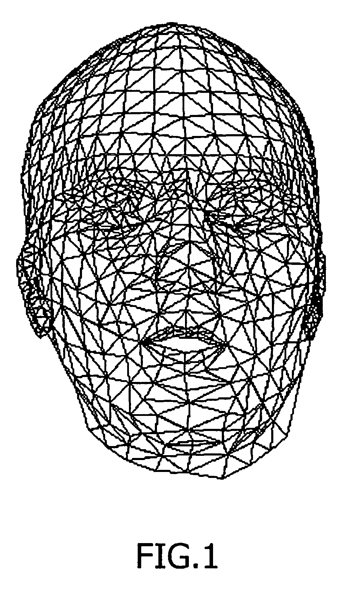

The present invention relates to a method of mapping texture data, i.e. luminance or chrominance data, of an input image split into input triangles onto an output image also split into corresponding output triangles. Input and output triangle meshes can be made of any possible triangle as shown in Figure 1.

As neither output mesh nor input mesh can be regular for a backward mapping corresponding to equations (1) or a forward mapping corresponding to equations (2), respectively, an additional scan-conversion space (s,t), hereinafter referred to as intermediate space, is introduced. The current positions (x,y) and (u,v) in the output image and in the input image, respectively, are computed on the basis of a current point in said intermediate space.

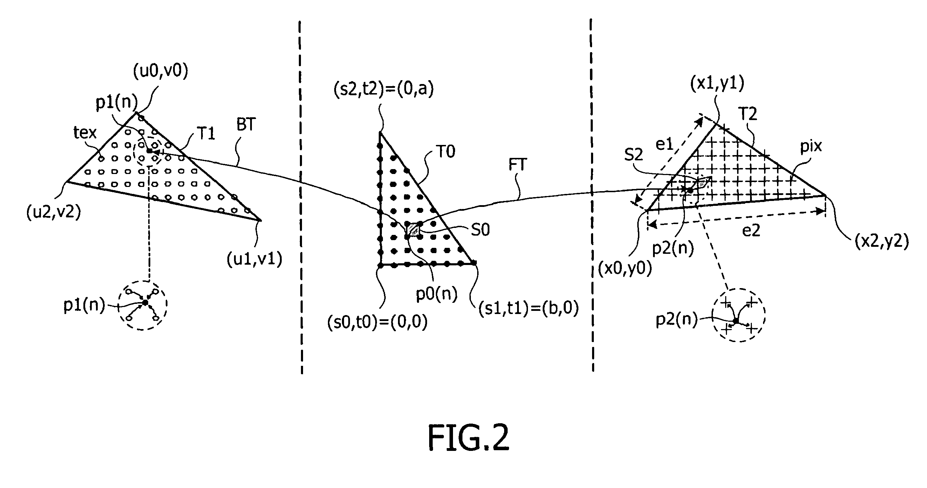

Figure 2 illustrates a first embodiment of the mapping method in accordance with the invention. The intermediate space comprises an intermediate rectangle triangle T0 having three vertices (s0,t0)=(0,0), (s1,t1)=(b,0) and (s2,t2)= (0,a). An input triangle T1 having vertices (u0,v0), (u1,v1) and (u2,v2) is linked to the intermediate rectangle triangle T0 via an inverse affine transform BT that can be expressed by the backward mapping equations (1). Thanks to the use of the intermediate rectangle triangle, the calculation of the affine coefficients $\frac{\partial u}{\partial s}, \frac{\partial u}{\partial t}, \frac{\partial v}{\partial s}$ and $\frac{\partial v}{\partial t}$ is simplified as expressed by equations (5):

$$\begin{cases} \dfrac{\partial u}{\partial s} = \dfrac{u1 - u0}{b} \\[2mm] \dfrac{\partial u}{\partial t} = \dfrac{u2 - u0}{a} \\[2mm] \dfrac{\partial v}{\partial s} = \dfrac{v1 - v0}{b} \\[2mm] \dfrac{\partial v}{\partial t} = \dfrac{v2 - v0}{a} \end{cases} \qquad (5)$$

Similarly, an output triangle T2 having vertices (x0,y0), (x1,y1) and (x2,y2) is linked to the intermediate rectangle triangle T0 via an inverse affine transform FT that can be expressed by the forward mapping equations (2). Thanks to the use of the rectangle triangle, the calculation of the affine coefficients $\dfrac{\partial x}{\partial s}, \dfrac{\partial x}{\partial t}, \dfrac{\partial y}{\partial s}$ and $\dfrac{\partial y}{\partial t}$ is also simplified as expressed by equations (6):

$$\begin{cases} \dfrac{\partial x}{\partial s} = \dfrac{x1 - x0}{b} \\[2mm] \dfrac{\partial x}{\partial t} = \dfrac{x2 - x0}{a} \\[2mm] \dfrac{\partial y}{\partial s} = \dfrac{y1 - y0}{b} \\[2mm] \dfrac{\partial y}{\partial t} = \dfrac{y2 - y0}{a} \end{cases} \qquad (6)$$

As a consequence two sets of affine coefficients are computed:

- one for the backward mapping between the intermediate space and the input image, and
- one for the forward mapping between the intermediate space and the output image. These sets of coefficients are computed in a relatively computation-free setup, saving silicon area and consuming less power.

Once the two sets of coefficients have been computed, the mapping method in accordance with the invention is adapted to determine, for an intermediate point p0(n) of the intermediate rectangle triangle T0, n being an integer, an input transformed point p1(n) in the input triangle T1 using the inverse affine transform BT. The input transformed point p1(n) belonging to the input triangle is in general not located on a grid of texels with integer coordinates. A filtered intensity value I(n) corresponding to said point p1(n) is then derived according to a step of filtering a set of texels of the input triangles surrounding said input transformed point p1(n).

As a first example, the filtering step is based on the use of a bilinear filter adapted to implement a bilinear interpolation. Said bilinear interpolation is illustrated by the zoom in Figure 2 and is based, for example, on the use of the texture values I(t1) to I(t4) of the 4 texels t1 to t4 surrounding the input transformed point p1(n) and on the distance a 1 to a4 of said point p1(n) with respect to said 4 texels. The filtered intensity value I(n) is then derived as follows:

$$I(n) = \dfrac{a1.I(t1) + a2.I(t2) + a3.I(t3) + a4.I(t4)}{a1 + a2 + a3 + a4} \qquad (7)$$

This bilinear interpolation is particularly simple to implement. It will be apparent to the one skilled in the art that the bilinear interpolation can be computed according to other equivalent principles. For example, the coefficients a1 to a4 can also correspond to the surface of four quadrants delimited by a horizontal and a vertical line passing through the input transformed point p1(n).

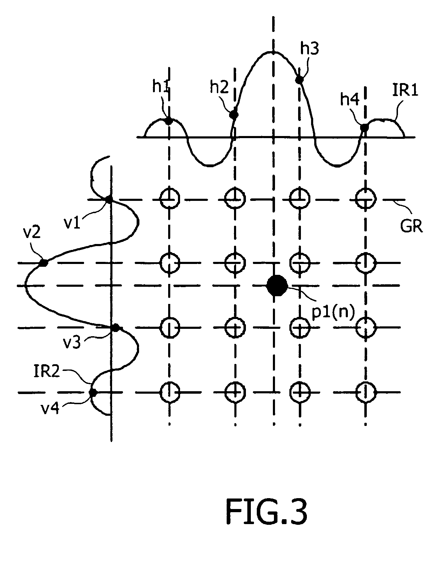

As another example, the filtering step is based on the use of two mono-dimensional finite impulse response FIR filters applied sequentially in a horizontal direction and in a vertical direction. The filter taps are determined on the basis of the impulse response IR1 or IR2 which is centered on the input transformed point p1(n) according to a given direction, i.e. horizontal or vertical, and of the grid GR of texels with integer coordinates, as illustrated in Figure 3 in the case of a four taps filter. This results in four coefficients h1 to h4 and v1 to v4 for each FIR filter. The horizontal FIR filter is applied to the four horizontal segments of the set of 16 texels, resulting in 4 intermediate filtered intensity values. Then, the vertical FIR filter is applied to the 4 intermediate filtered intensity values, resulting in a final filtered intensity value I(n). It will be apparent to a person skilled in the art that the number of filter taps is not limited to 4 and that said number may be increased or decreased. Other filters can also be applied, such a polyphase filter for example, depending on the desired visual quality and/or the available computing power.

Once the filtered intensity value I(n) associated with an intermediate point p0(n) of the intermediate rectangle triangle T0 has been determined, the mapping method in accordance with the invention is adapted to determine, for said intermediate point p0(n), an output transformed point p2(n) in the output triangle T2 to which the filtered intensity value is then associated, using the direct affine transform FT.

The mapping method in accordance with the invention then comprises a step of calculating a contribution to a set of pixels surrounding said output transformed point p2(n) on the basis of the filtered intensity value I(n) and of a location of the output point with respect to said set of pixels.

As a first example, the calculating step is based on the distance of the output transformed point p2(n) with respect to a set of pixels belonging to a grid of pixels with integer coordinates and surrounding said output transformed point. For example, if d1 to d4 are the distances between the output transformed point p2(n) and the 4 pixels surrounding said point p2(n), as shown in the zoom in Figure 2, the four contributions j1(n) to j4(n) are calculated as follows:

$$j_i(n) = \frac{D - d_i}{D} . I(n) , \qquad (8)$$

where D = d1 + d2 + d3 + d4 and where i = 1, 2, 3 or 4

Said calculating step can also include a sub-step of weighting the contribution $j_i(n)$ by a surface S2 corresponding to the direct affine transform FT of the unitary surface S0 associated with the intermediate point p0(n). The contribution is then computed as follows:

$$j_i(n) = S2 . \frac{D - d_i}{D} I(n) = k_i . I(n) \qquad (9)$$

For a given pixel, the contributions can come from different output transformed points. Said contributions are added for said given pixel until the sum of the coefficients $k_i$ is equal to 1.

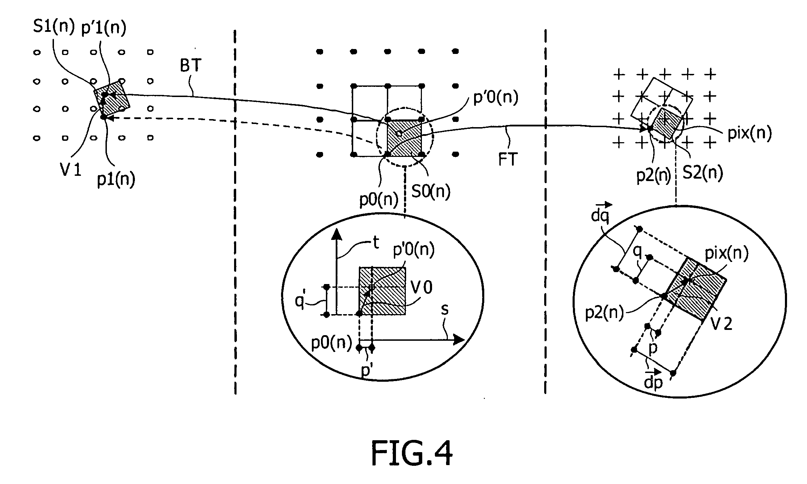

Figure 4 illustrates another embodiment of the mapping method in accordance with the invention. The mapping method comprises a step of determining a first set of coefficients which defines the inverse affine transform BT, said inverse transform being capable of transforming an intermediate rectangle triangle into an input triangle. Said mapping method also comprises a step of determining a second set of affine coefficients corresponding to the direct affine transform FT, said direct transform being adapted to transform the intermediate rectangle triangle into an output triangle.

Once the two sets of coefficients have been computed, the mapping method in accordance with said another embodiment is adapted to determine, for an intermediate point p0(n) of the intermediate rectangle triangle T0, an output transformed point p2(n) in the output triangle using the direct affine transform FT. Said transform is also adapted to transform a surface S0(n) formed by intermediate points into a surface S2(n). Then a pixel pix(n) with integer coordinates in the (x,y) coordinate system belonging to the surface S2(n), if any, is determined. The output vector V2(p,q) corresponding to the translation of the output transformed point p2(n) towards the translated pixel pix(n) is thus computed. The corresponding intermediate vector V0(p',q') in the intermediate space is thus derived as follows:

$$p' = \frac{p}{\|d\bar{p}\|} \quad \text{and} \quad q' = \frac{q}{\|d\bar{q}\|} .$$

A translation of the intermediate point p0(n) towards a translated intermediate point p'0(n) according to the intermediate vector V0 is then performed. The mapping method in accordance with the invention is then adapted to determine, for said translated intermediate point p'0(n), an input transformed point p'1(n) in the input triangle using the inverse affine transform BT (see continuous arrow in Figure 4). A filtered intensity value I(n) corresponding to said point p'1(n) is then derived from a step of filtering a set of texels of the input triangle surrounding said input transformed point p'1(n), as described before. Said another embodiment only requires a filtering step compared to the first embodiment and thus saves computing resources.

Alternatively, the translated intermediate point p'0(n) is not computed. Instead, the mapping method is adapted to determine, for the intermediate point p0(n), an input transformed point p1(n) in the input triangle using the inverse affine transform BT (see continuous arrow in Figure 4). An input vector V1(p'',q'') corresponding to the intermediate vector V0(p',q') in the intermediate space is thus derived as follows:

$$p''=\frac{\partial u}{\partial s}p'+\frac{\partial u}{\partial t}q' \text{ and } q''=\frac{\partial v}{\partial s}p'+\frac{\partial v}{\partial t}q'.$$

A translated input transformed point p'1(n) is then determined using the input vector V 1 (p'',q'') and a filtered intensity value I(n) corresponding to said point p'1 (n) is then derived from a step of filtering a set of texels of the input triangle surrounding said point p'1(n), as described before.

The mapping method in accordance with the invention creates an intermediate scan-conversion space and is adapted:

- to perform a backward mapping from the intermediate space to the input image so as to determine intermediate intensity values corresponding to points of said intermediate space on the basis of input intensity values of texels of the input image, and
- to perform a forward mapping from the intermediate space to the output image so as to determine intensity values corresponding to pixels of said output image on the basis of the intermediate intensity values.

Said mapping method can be refined according to different embodiments.

According to a first embodiment of the invention, the intermediate rectangle triangle is defined by lengths a and b, which are the lengths of the edges aligned with the s and t axis, i.e. opposite to the hypotenuse. These two lengths a and b are preferably chosen as a power of 2 in order to simplify the affine coefficients computing.

In order to assure no hole in the output image the vectors based on affine coefficients $\left(\frac{\partial x}{\partial s},\frac{\partial x}{\partial t}\right)$ and $\left(\frac{\partial y}{\partial s},\frac{\partial y}{\partial t}\right)$ and are also preferably chosen as having a length lower than 1. For example, the two lengths a and b equal to a power of 2 greater than the length of the corresponding edges e1 and e2 in the output triangle.

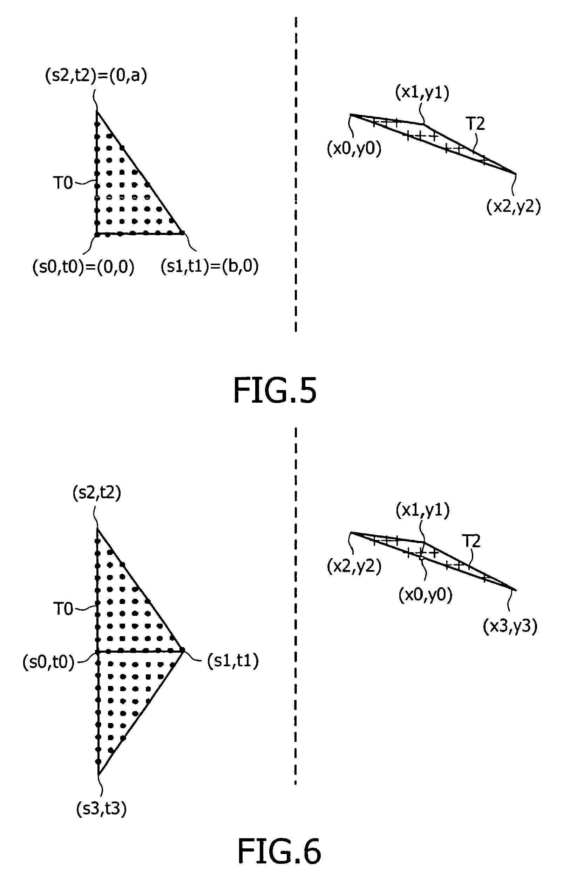

In some particular cases, there can be a great distortion between the intermediate rectangle triangle and the output triangle. Figure 5 illustrates such a bad case for the computation power requested for scan-conversion. The area of the intermediate triangle is much larger than the output triangle so that the number of scanned intermediate points is unbalanced compared with the actual number of pixels to be computed. That is why, according to another embodiment of the invention, the output triangle is cut into two sub-triangles. A new vertex is then introduced on the longest edge of the output triangle, as shown in Figure 6, for example at the basis of one of the triangle altitudes. In Figure 6, the intermediate points (s0,t0), (s1,t1), (s2,t2) and (s3,t3) correspond to the output transformed points (x0,y0), (x1,y1 ), (x2,y2) and (x3,y3), respectively. Then, the scan-conversion of the intermediate triangle is performed. For an intermediate point, an input transformed point in the input image is determined. The texels surrounding said input transformed point are subsequently filtered, as described before. The position of the output transformed point in the output triangle is also determined. The intermediate points are then re-sampled using an input-driven filter, as described before, said filter generating the intensity values of pixels positioned onto a grid with integer coordinates in the output image. Mapping a rectangle triangle to another one assures a well-balanced ratio between intermediate points and pixels.

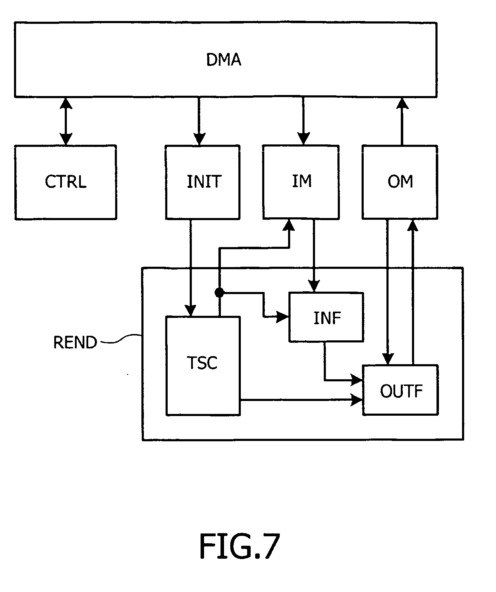

Figure 7 shows a block diagram of a rendering device in accordance with the invention. Said rendering device is based on a hardware coprocessor realization. This coprocessor is assumed to be part of a shared memory system. The dynamic memory access DMA unit interfaces the coprocessor with a main memory (not represented). A controller CTRL controls the internal process scheduling. An input memory IM contains a local copy of the input image. An initialization INIT unit accesses geometric parameters, i.e. the vertices of the different triangles, through the DMA unit. From said geometric parameters, the INIT unit computes the affine coefficients and the edge slopes for the scan-conversion process.

These geometric parameters are then processed by the rendering REND unit, which is in charge of scan-converting the intermediate triangle setting-up during the initialization process by the INIT unit. The result of the scan-conversion process is stored in a local output memory OM.

The rendering REND unit comprises a triangle scan TSC unit, which is adapted to compute, for each pixel p0 of a line of the intermediate triangle, the corresponding location p1 within the input image and the corresponding location p2 within the output image. The coordinates of the input point p 1 are subsequently used to address the input memory IM to get a set of texels with integer coordinates (u,v) to be filtered by a first filter INF unit, resulting in a filtered intensity value. Said filtered intensity value is provided together with the coordinates of the output point p2 to the inputs of a second filter OUTF unit, which is input driven. Said second filter unit is adapted to compute contributions to pixels of the output image having integer coordinates (x,y) and surrounding the output point p2. The output memory OM stores accumulated contributions. Once all the triangles have been rendered, the output memory is written back into a system memory, a video controller being adapted to access the output image in said system memory to display it.

The mapping method in accordance with the invention can be implemented by means of items of hardware or software, or both. Said hardware or software items can be implemented in several manners, such as by means of wired electronic circuits or by means of an integrated circuit that is suitable programmed, respectively. The integrated circuit can be contained in a portable apparatus. The integrated circuit comprises a set of instructions. Thus, said set of instructions contained, for example, in a memory of the portable apparatus may cause the integrated circuit to carry out the different steps of the mapping method. The set of instructions may be loaded into the memory by reading a data carrier such as, for example, a disk. A service provider can also make the set of instructions available via a communication network such as, for example, the Internet.

Any reference sign in the following claims should not be construed as limiting the claim. It will be obvious that the use of the verb "to comprise" and its conjugations do not exclude the presence of any other steps or elements besides those defined in any claim. The word "a" or "an" preceding an element or step does not exclude the presence of a plurality of such elements or steps.

**Claims**

1. A method of mapping an input image split into input triangles including texels onto an output image also split into corresponding output triangles including pixels, said method comprising the steps of:

   - determining an inverse affine transform (BT) for transforming an intermediate rectangle triangle (T0) into an input triangle (T1);
   - determining a direct affine transform (FT) for transforming the intermediate rectangle triangle (T0) into an output triangle (T2);
   - applying the inverse affine transform to intermediate points of the intermediate rectangle triangle (T0) so as to determine intermediate intensity values corresponding to said intermediate points on the basis of input intensity values of texels; and
   - applying the direct affine transform to the intermediate points so as to determine output intensity values of pixels on the basis of the intermediate intensity values.

2. A method as claimed in claim 1, wherein the step of applying the inverse affine transform is adapted to transform an intermediate point (p0(n)) into an input transformed point (p1(n)) in the input triangle, and to determine, for said intermediate point, an intermediate intensity value based on a filtering operation of texels surrounding the input transformed point.

3. A method as claimed in claim 2, wherein the filtering operation comprises a bilinear interpolation using four texels surrounding the input transformed point.

4. A method as claimed in claim 2, wherein the filtering operation comprises applying sequentially a first mono-dimensional finite impulse response filter in a horizontal direction and a second mono-dimensional finite impulse response filter in a vertical direction.

5. A method as claimed in claim 1, wherein the step of applying the direct affine transform is adapted to transform an intermediate point (p0(n)) into an output transformed point (p2(n)) in the output triangle, and to determine, for said intermediate point, a contribution to output intensity values of pixels surrounding said output transformed point on the basis of the intermediate intensity value.

6. A method as claimed in claim 1, further comprising a step of determining lengths (a,b) of the intermediate rectangle triangle opposite to the hypotenuse which are equal to a power of 2 greater than the length of corresponding edges (e1,e2) in the output triangle.

7. A method as claimed in claim 1, further comprising a step of dividing the output triangle into two sub-triangles before the step of applying the direct affine transform.

8. A method as claimed in claim 1, wherein:

- the step of applying the direct affine transform is adapted to determine an output point (p2(n)) and a corresponding output surface (S2(n)) in the output triangle (T2) from an intermediate point (p0(n)) and a corresponding intermediate unitary surface (S0(n)), to determine a pixel (pix(n)) with integer coordinates belonging to the output surface, and to determine an output vector (V2) defined by the output point and the pixel with integer coordinates; and
- the step of applying the inverse affine transform is adapted to determine an input transformed point (p'1(n)) in the input triangle (T1) from the intermediate point and the output vector, and to filter the input intensity values of texels surrounding said input transformed point so as to derive an output intensity value of the pixel with integer coordinates.

9. A device for rendering an output image split into corresponding output triangles including pixels on the basis of textured data of an input image split into input triangles including texels, said device comprising:

- means (INIT) for determining an inverse affine transform (BT) for transforming an intermediate rectangle triangle into an input triangle, and for determining a direct affine transform (FT) for transforming an intermediate rectangle triangle into an output triangle;
- means (TSC,IM,INF) for applying the inverse affine transform to intermediate points of the intermediate rectangle triangle (T0) so as to determine intermediate intensity values corresponding to said predetermined points on the basis of input intensity values of texels; and
- means (TSC,OM,OUTF) for applying the direct affine transform to the intermediate points so as to determine output intensity values of pixels on the basis of the intermediate intensity values.

10. A portable apparatus comprising a device as claimed in claim 9.

11. A computer program product comprising program instructions for implementing, when said program is executed by a processor, a method as claimed in claim 1.

**Patentansprüche**

1. Verfahren zum Abbilden eines Eingabebildes, das in Eingabedreiecke mit Texeln unterteilt ist, auf einem Ausgabebild, welches in entsprechende Ausgabedreiecke mit Pixeln unterteilt ist, wobei das Verfahren die folgenden Schritte umfasst:

- Ermitteln einer inversen affinen Transformation (BT) zum Transformieren des Dreiecks eines Zwischenvierecks (T0) in ein Eingabedreieck (T1);
- Ermitteln einer direkten affinen Transformation (FT) zum Transformieren des Dreiecks des Zwischenvierecks (T0) in ein Ausgabedreieck(T2);
- Anwenden der inversen affinen Transformation auf Zwischenpunkte des Dreiecks des Zwischenvierecks (T0), um auf der Grundlage der Eingabeintensitätswerte der Texel die Zwischenintensitätswerte zu ermitteln, die den Zwischenpunkten entsprechen, und
- Anwenden der direkten affinen Transformation auf die Zwischenpunkte, um auf der Grundlage der Zwischenintensitätswerte die Ausgabeintensitätswerte der Pixel zu ermitteln.

2. Verfahren nach Anspruch 1, wobei der Schritt des Anwendens der inversen affinen Transformation angewendet wird, um einen Zwischenpunkt (p0(n)) in einen transformierten Eingabepunkt (p1(n)) in dem Eingabedreieck zu transformieren und um ausgehend von einem Filtervorgang der Texel, die den transformierten Eingabepunkt umgeben, einen Zwischenintensitätswert für den Zwischenpunkt zu bestimmen.

3. Verfahren nach Anspruch 2, wobei der Filtervorgang eine bilineare Interpolation unter Verwendung von vier Texeln umfasst, die den transformierten Eingabepunkt umgeben.

4. Verfahren nach Anspruch 2, wobei der Filtervorgang das aufeinander folgende Anwenden eines ersten eindimensionalen FIR-Filters (Finite Impulse Response) in horizontaler Richtung und eines zweiten eindimensionalen FIR-Filters in vertikaler Richtung umfasst.

5. Verfahren nach Anspruch 1, wobei der Schritt des Anwendens der direkten affinen Transformation dazu ausgelegt ist, einen Zwischenpunkt (p0(n)) in einen transformierten Ausgabepunkt (p2(n)) im Ausgabedreieck zu transformieren und für diesen Zwischenpunkt einen Beitrag zu dem Ausgabeintensitätswert der Pixel, die den transformierten Ausgabepunkt umgeben, auf der Grundlage des Zwischenintensitätswertes zu bestimmen.

6. Verfahren nach Anspruch 1, welches weiterhin den Schritt des Ermittelns von Längen (a, b) des Dreiecks des Zwischenvierecks gegenüber der Hypotenuse umfasst, die um eine Potenz von 2 größer sind als die Länge der entsprechenden Kanten (el, e2) im Ausgabedreieck.

7. Verfahren nach Anspruch 1, welches vor dem Anwenden der direkten affinen Transformation weiterhin einen Schritt des Unterteilens des Ausgabedreiecks in zwei Teildreiecke umfasst.

8. Verfahren nach Anspruch 1, wobei:

- der Schritt des Anwendens der direkten affinen Transformation dazu ausgelegt ist, aus einem Zwischenpunkt (p0(n)) und einer entsprechenden einheitlichen Zwischenfläche (S0(n)) einen Ausgabepunkt (p2(n)) und eine entsprechende Ausgabefläche (S2(n)) in dem Ausgabedreieck (T2) zu ermitteln, ein Pixel (pix(n)) mit ganzzahligen Koordinaten, die zu der Ausgabefläche gehören, zu ermitteln, und einen Ausgabevektor (V2) zu ermitteln, der durch den Ausgabepunkt und das Pixel mit den ganzzahligen Koordinaten definiert ist; und
- der Schritt des Anwendens der inversen affinen Transformation dazu ausgelegt ist, aus dem Zwischenpunkt und dem Ausgabevektor einen transformierten Eingabepunkt (p'1(n)) in dem Eingabedreieck (T1) zu ermitteln und die Eingabeintensitätswerte der Texel um den transformierten Eingabepunkt herum zu filtern, um einen Ausgabeintensitätswert des Pixels mit den ganzzahligen Koordinaten abzuleiten.

9. Vorrichtung zur Wiedergabe eines Ausgabebildes, welches in entsprechende Ausgabedreiecke mit Pixeln unterteilt ist, auf der Grundlage von texturierten Daten eines Eingabebildes, welches in Eingabedreiecke mit Texeln unterteilt ist, wobei die Vorrichtung umfasst:

- Mittel (INIT) zum Ermitteln einer inversen affinen Transformation (BT) zum Transformieren eines Dreiecks eines Zwischenvierecks in ein Eingabedreieck und zum Ermitteln einer direkten affinen Transformation (FT) zum Transformieren eines Dreiecks eines Zwischenvierecks in ein Ausgabedreieck;
- Mittel (TSC, IM, INF) zum Anwenden der inversen affinen Transformation auf Zwischenpunkte des Zwischenviereck-Dreiecks (T0), so dass auf der Grundlage der Eingabeintensitätswerte der Texel Zwischenintensitätswerte entsprechend den vorgegeben Punkten ermittelt werden, und
- Mittel (TSC, OM, OUTF) zum Anwenden der direkten affinen Transformation auf die Zwischenpunkte, um die Ausgabeintensitätswerte der Pixel auf der Grundlage der Zwischenintensitätswerte zu ermitteln.

10. Tragbares Gerät mit der Vorrichtung nach Anspruch 9.

11. Computerprogrammerzeugnis mit Programmbefehlen zum Implementieren eines Verfahrens gemäß Anspruch 1, wenn das Programm von einem Prozessor ausgeführt wird.

**Revendications**

1. Procédé de mappage d'une image d'entrée divisée en triangles d'entrée, y compris des texels en une image de sortie divisée également en triangles de sortie, y compris des pixels, ledit procédé comprenant les étapes consistant à :

EP 1 704 535 B1

- déterminer une transformée affine inverse (BT) pour transformer un triangle rectangle intermédiaire (T0) en un triangle d'entrée (T1) ;
- déterminer une transformation affine directe (FT) pour transformer le triangle rectangle intermédiaire (T0) en un triangle de sortie (T2) ;
- appliquer la transformation affine inverse aux points intermédiaires du triangle rectangle intermédiaire (T0) pour déterminer les valeurs d'intensité intermédiaires correspondant auxdits points intermédiaires en fonction des valeurs d'intensité d'entrée des texels ; et
- appliquer la transformation affine directe aux points intermédiaires pour déterminer les valeurs d'intensité de sortie des pixels en fonction des valeurs d'intensité intermédiaires.

2. Procédé selon la revendication 1, dans lequel l'étape d'application de la transformation affine inverse est adaptée pour transformer un point intermédiaire (p0(n)) en un point d'entrée transformé (p1 (n)) dans le triangle d'entrée, et pour déterminer, pour ledit point intermédiaire, une valeur d'intensité intermédiaire fondée sur une opération de filtrage des texels entourant le point d'entrée transformé.

3. Procédé selon la revendication 2, dans lequel la transformation de filtrage consiste en une interpolation bilinéaire utilisant quatre texels entourant le point d'entrée transformé.

4. Procédé selon la revendication 2, dans lequel l'opération de filtrage comprend l'application en séquence d'un premier filtre de réponse à impulsion finie monodimensionnel dans une direction horizontale et d'un second filtre de réponse à impulsion finie monodimensionnel dans une direction verticale.

5. Procédé selon la revendication 1, dans lequel l'étape d'application de la transformation affine directe est adaptée pour transformer un point intermédiaire (p0(n)) en un point de sortie transformé (p2(n)) dans le triangle de sortie, et pour déterminer, pour ledit point intermédiaire, une contribution aux valeurs d'intensité de sortie des pixels entourant ledit point de sortie transformé fondée sur la valeur d'intensité intermédiaire.

6. Procédé selon la revendication 1, comprenant en outre une étape de détermination des longueurs (a, b) du triangle rectangle intermédiaire opposées à l'hypoténuse, qui sont égales à une puissance de 2 supérieure à la longueur des arêtes correspondantes (el, e2) du triangle de sortie.

7. Procédé selon la revendication 1, comprenant en outre une étape de division du triangle de sortie en deux sous-triangles avant l'étape d'application de la transformation affine directe.

8. Procédé selon la revendication 1, dans lequel :

- l'étape d'application de la transformation affine directe est adaptée pour déterminer un point de sortie (p2(n)) et une surface de sortie correspondante (S2(n)) dans le triangle de sortie (T2) à partir d'un point intermédiaire (p0(n)) et d'une surface unitaire intermédiaire correspondante (S0(n)), pour déterminer un pixel (pix(n)) avec des coordonnées entières appartenant à la surface de sortie, et pour déterminer un vecteur de sortie (V2) défini par le point de sortie et le pixel ayant des coordonnées entières ; et
- l'étape d'application de la transformation affine inverse est adaptée pour déterminer un point d'entrée transformé (p'1(n)) dans le triangle d'entrée (T1) à partir du point intermédiaire et du vecteur de sortie, et pour filtrer les valeurs d'intensité d'entrée des texels entourant ledit point d'entrée transformé pour dériver une valeur d'intensité de sortie du pixel ayant des coordonnées entières.

9. Dispositif pour le rendu d'une image de sortie divisée en triangles de sortie correspondants comprenant des pixels, fondé sur des données texturées d'une image d'entrée divisée en triangles d'entrée comprenant des texels, ledit dispositif comprenant :

- des moyens (INIT) pour déterminer une transformation affine inverse (BT) pour transformer un triangle rectangle intermédiaire en un triangle d'entrée, et pour déterminer une transformation affine directe (FT) pour transformer un triangle rectangle intermédiaire en un triangle de sortie ;
- des moyens (TSC, IM, INF) pour appliquer la transformation affine inverse aux points intermédiaires du triangle rectangle intermédiaire (T0) pour déterminer les valeurs d'intensité intermédiaires correspondant auxdits points prédéterminés, fondées sur les valeurs d'intensité d'entrée des texels ; et
- des moyens (TSC, OM, OUTF) pour appliquer la transformation affine directe aux points intermédiaires pour déterminer les valeurs d'intensité de sortie des pixels, fondées sur les valeurs d'intensité intermédiaires.

**10.** Appareil portable comportant un dispositif selon la revendication 9.

**11.** Produit sous forme de programme informatique comprenant des instructions de programmation pour la mise en oeuvre du procédé selon la revendication 1 lorsque ledit programme est exécuté par un processeur.

FIG.1

FIG.2

EP 1 704 535 B1

FIG.3

FIG.4

(s2,t2)=(0,a)

T0

(s0,t0)=(0,0)  (s1,t1)=(b,0)

(x1,y1)

T2

(x0,y0)

(x2,y2)

## FIG.5

(s2,t2)

T0

(s0,t0)  (s1,t1)

(s3,t3)

(x1,y1)

T2

(x2,y2)

(x0,y0)

(x3,y3)

## FIG.6

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GHAZANFARPOUR D. ; PEROCHE B.** A high-quality filtering using forward texture mapping, Computers and Graphics. Pergamon Press Ltd, January 1991, vol. 15, 569-577